# EUROPEAN PATENT SPECIFICATION

(11) **EP 4 092 320 B1**
(45) Date of publication and mention of the grant of the patent: **23.04.2025**
(21) Application number: 22174404.8
(22) Date of filing: 19.05.2022
(51) Int. Cl.: F23B 30/08, F23B 30/00, F23B 10/02, F23G 5/04, F23G 5/16, F23G 5/44, F23G 5/46, F23G 5/50

(54) **BALE BOILER APPARATUS**
BALLEN KESSELGERÄT
CHAUDIÈRE À BALLES

(30) Priority: 19.05.2021 US 202117303068
(43) Date of publication of application: 23.11.2022
(73) Proprietor: Gaudreault, Daniel, Summerville, SC 29485 (US)
(72) Inventor: Gaudreault, Daniel, Summerville, SC 29485 (US)
(74) Representative: Liebl, Thomas

(56) References cited:
- EP-A1- 2 787 280
- EP-A2- 0 257 019
- CN-A- 106 090 883
- DE-A1- 3 516 859
- US-A- 4 009 667
- US-B1- 6 886 340

## Description

### Cross Reference to Related Applications

The present application is a non-provisional of U.S. Provisional Application Serial No. 62/704,631 entitled Baler Boiler Apparatus and Method, filed on May 19, 2020.

### Background of the Invention

The present invention relates to an apparatus for burning bales of material in a boiler in order to generate electricity. More specifically, the present invention relates to an apparatus that feeds bales of material into a multi-stage boiler for incineration, thereby providing heat to power a steam turbine or other power generation mechanism.

Boilers have been used for decades to burn oil, coal, wood and other materials in order to generate heat for powering a steam turbine, which in turn generates electricity. In recent years, efforts have been made to create boilers that are designed to burn bales, which are typically formed from a biomass material such as hay or straw. The following references describe various processes and mechanisms for burning bales in a boiler.

### Patent No. CZ303224 Process of Burning Biomass Bales and Boiler for Making the Same

In the present invention, there is disclosed a process of burning biomass bales in a boiler with controlled supply of combustion air supplied through the mediation of a blower or an exhaust fan of combustion products into a combustion chamber through at least one nozzle in the direction variable in vertical plane wherein the invented burning process is characterized in that combustion air is supplied all over the time of the bale burning substantially tangentially to the upper burning surface of the bale and exhaust of combustion products takes place in the direction of the supplied air. There is also disclosed a boiler for making the above-described process wherein the boiler is provided with at least one nozzle (7) for supply of combustion air, said nozzle (7) projecting from said boiler combustion chamber (2) wall substantially at the level of a bale (3) upper surface a being rotatable about a horizontal axis, whereby exhaust of combustion products from the chamber (2) is situated at a place opposite to the nozzle (7).

### Patent No. EP0200416 Apparatus for Incinerating Waste Material in an Essentially Baled Form

A furnace 10 for cylindrical bales 46 of straw has support means 14 whereby the bale is rotated about an axis 20 while it is burnt and heat is transferred to water in a jacket 12. Paddles 40 circulate partially burnt straw through the combustion zone. Air is injected tangentially with respect to the bale surface and in the direction of rotation. Bales are loaded into the furnace axially by an openable end cover 44 mounted on rails 50 and actuated by rams.

### Patent No. EP2762777 Boiler

Boiler for burning whole bales of biomass, the boiler containing a combustion chamber (1) and a heat exchanger (2), said combustion chamber (1) containing a waste-gas flue (3) arranged in its top section and where the inlet (24) of waste gases into the waste-gas flue (3) is arranged on the side of the combustion chamber (1) which is opposite to the side with at least one intake (25) supplying the combustion chamber (1) with combustion air.

### Patent No. EP2767759 Boiler and Method of Feeding of Fuels, Particularly Straw Bales in the Boiler

A biomass combustion boiler, particularly firing full biomass bales (3), contains a pre-heating chamber (1) and a combustion chamber (2). A closing plate (4) is located outside the pre-heating chamber (1), in its basic position, and is insertable into the pre-heating chamber (1). In its inserted position it divides the pre-chamber (1) into a lower space (18) freely connected with the combustion chamber (2) and an upper space (19) for newly supplied fuel. Fuel, particularly full straw bales (3), is supplied to the boiler by first inserting closing plate (4) into the pre-heating chamber (1), by then opening of a drop gate (6) of the pre-heating chamber (1) and inserting the fuel into the pre-heating chamber (1). The drop gate (6) of the pre-heating chamber (1) then closes and finally, the closing plate (4) is removed from the pre- heating chamber (1). A pusher pressure piston (5) conveys parts of the fuel from the bottom of pre-heating chamber (1) into the combustion chamber (2).

### Patent No. FR2490320 Furnace for Compressed Straw Bales-Has Ash Rake with Scrapers for Discharge Through Combustion Chamber Floor

The furnace has a combustion chamber (4) which has a vertical panel separating it from the fuel feeder located over the ash collector (6). The secondary combustion air is admitted through an opening (2) in the rear panel (5) of the furnace. The exhaust gases pass through a heat exchanger (16) mounted over the combustion chamber. The ashes are raked by revolving arms (9) fitted with prongs. There is a base between the combustion and collecting chambers with a groove for the discharge of cinders and to induce the primary air.

### Patent No. 8,261,677 Gasification Boiler for Solid Fuels, In Particular for Bales of Straw, with Optimized Exhaust Gas Valves

The invention relates to a gasification boiler for the combustion of solid fuels, in particular bales of straw, for heating purposes and for the production of hot water. The inventive boiler is characterized by optimal combustion and ash separation. The aim of the invention is to carry out the combustion of small particles in the most complete manner possible and to achieve an almost total separation of the ashes from the combustion gas upstream of the heat exchangers. To achieve this, according to the first feature of claim 1, the combustion and gasification chamber comprises lateral depressions that are configured next to the central grating and combustion chamber. Coarse particles collect in said depressions, leaving the fine particles to be carried with the combustion gas into the combustion chamber. According to the second feature of said claim, a cylindrical combustion chamber, configured as an additional component, is connected to the outlet of the combustion chamber. Said secondary combustion chamber significantly increases the combustion time, allowing small particles and partially oxidized gases to burn completely. According to the third feature, a cylindrical ash separator, configured as an additional component, is connected to the combustion chamber.

### WO1986000390 Heating Boiler for Producing Energy from Straw

Heating boiler intended to be used for burning straw, paper and similar fuel material in the form of compressed bales. The boiler is capable of supplying the material to be burned as a function of the heat requirements. It is necessary to provide optimum combustion conditions to maintain exhaust gas emission values within prescribed limits. The boiler is therefore provided inside its combustion compartment with a channel (2) wherein the compressed bales are dried and the slow distillation gas is removed to a large extent from the fuel. The bale supply channel (2) opens into a combustion chamber (4) enclosing the combustion compartment and preventing the flames from touching the water jacket (15) of the boiler.

Each of the above-referenced documents describe boilers or furnaces designed to burn bales, which are typically made from biomass materials, but each also has disadvantages.

EP 2 787 280 A1 discloses a device for the combustion of free-flowing solid fuel.

It would be advantageous to provide a boiler mechanism that transports and burns multiple bales of material, including biomass, and also bales that potentially include garbage, household waste, industrial waste, and the like, to create electrical power from waste products.

Disposing of household and industrial waste is an enormous global issue today, and a significant amount of such waste winds up in landfills and municipal dumps. It has been found that if household waste were formed into bales, the volume of space occupied by such waste would be reduced by approximately 90 percent, which would dramatically reduce the amount of land required to accommodate a dump. Further, if the bales of waste were then incinerated in a boiler used to generate electricity, then 1) the pressure would be reduced on landfills and dumps, 2) the environmental impact of the waste would be greatly reduced, and 3) the waste would be converted into energy that may be used for any number of positive purposes, including being fed into the local power grid to provide inexpensive electricity to the populace.

U.S. Patent Application Serial No. 14/716,229 is directed to a mechanism for creating bales, and although the description included therein largely discusses baling wood chips and other similar biomass materials, such a baler may also be used to create bales of trash, waste and refuse.

### BRIEF SUMMARY OF THE INVENTION

In accordance with one aspect of the invention, a first embodiment of a bale boiler apparatus includes a multi-stage boiler and a conveyor for moving bales through the boiler for incineration. The boiler is operatively attached to a power generator, such as a steam turbine generator, so that heat generated by the boiler is used to turn the steam turbine for generating electricity.

The conveyor extends longitudinally through the boiler, and the bales are placed on the conveyor, which transports the bales into the boiler for incineration. The ash and any leftover waste are then carried out of the boiler by the conveyor and are deposited into a container or receptacle for transport and disposal.

The boiler includes at least three stages that the bales pass through. The first stage is a non-burning stage, where heat from the boiler is used to dry any moisture that is contained therein, and to generally warm the bale before incineration. The conveyor then moves the bale to the second stage, which is the main incineration stage. In the incineration stage, the majority of the bale is burned, which creates the vast majority of the heat used to power the steam turbine or other heat-based electrical generator. After the incineration stage, a small portion of the bale that is still left (along with any ash and non-combustible trash that is still present) is transported by the conveyor to the third stage, which is a supplemental incineration stage. In this third stage, the remnants of the bale are burned until only ash and non-combustible trash and refuse remain. When the third stage supplemental incineration stage is complete, then any remaining ash and non-combustible trash is moved via the conveyor out of the third stage and deposited into a receptacle for transport and disposal.

### BRIEF DESCRIPTION OF THE DRAWINGS

These and other features, aspects, and advantages of the present invention will become better understood with regard to the following description, appended claims, and accompanying drawings where:
Figure 1 is a top view of one embodiment of a bale boiler apparatus in accordance with one aspect of the present invention, wherein the bale boiler apparatus includes a conveyor for transporting bales of material through a multi-stage boiler;
Figure 2 is an elevated perspective view of one embodiment of a bale boiler apparatus in accordance with one aspect of the present invention, showing the conveyor system carrying a plurality of bales through a three-stage boiler apparatus;
Figure 3 is a front cutaway view of one embodiment of a bale boiler apparatus in accordance with one aspect of the present invention, wherein the bale boiler apparatus includes a conveyor for transporting bales of material through a multi-stage boiler; and
Figure 4 is a side view of one embodiment of a bale boiler apparatus in accordance with one aspect of the present invention.

### Detailed Description of the Invention

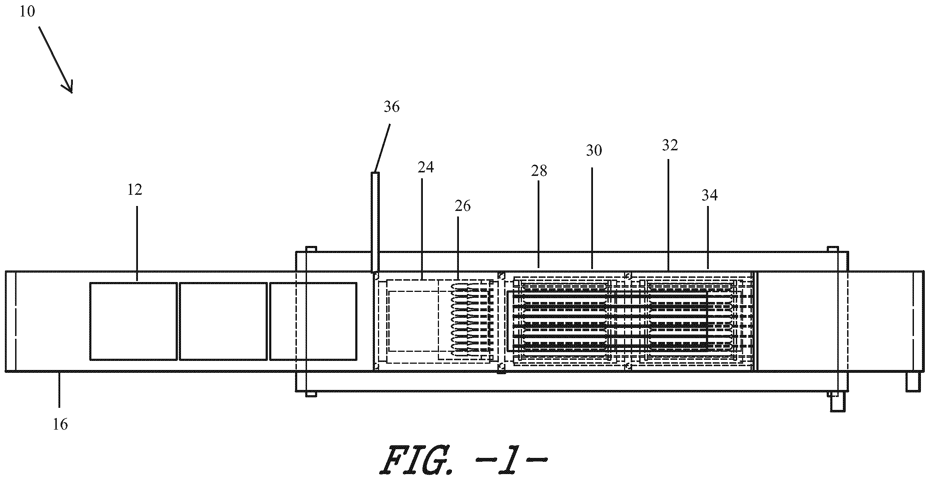

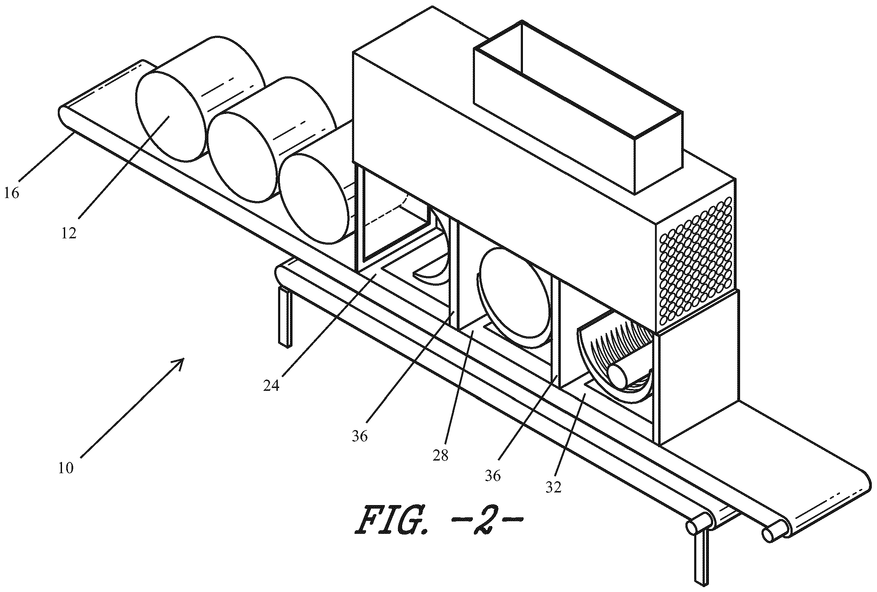

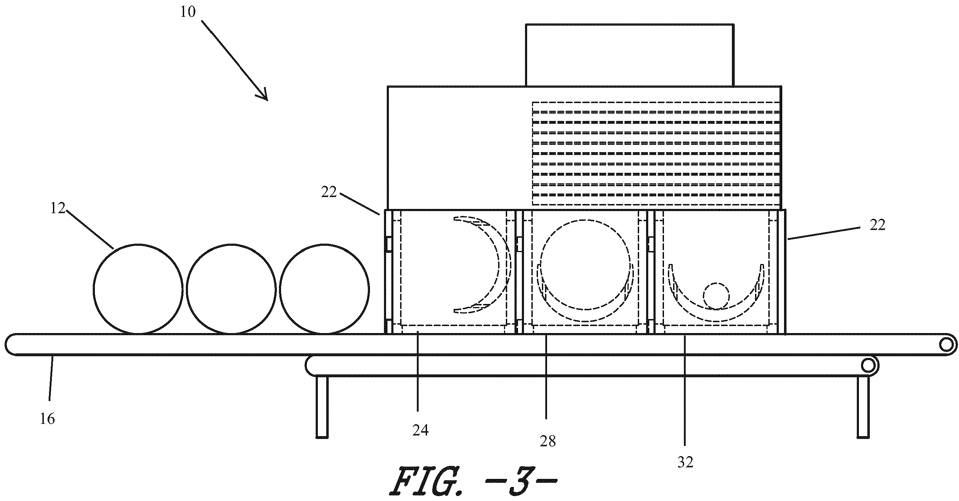

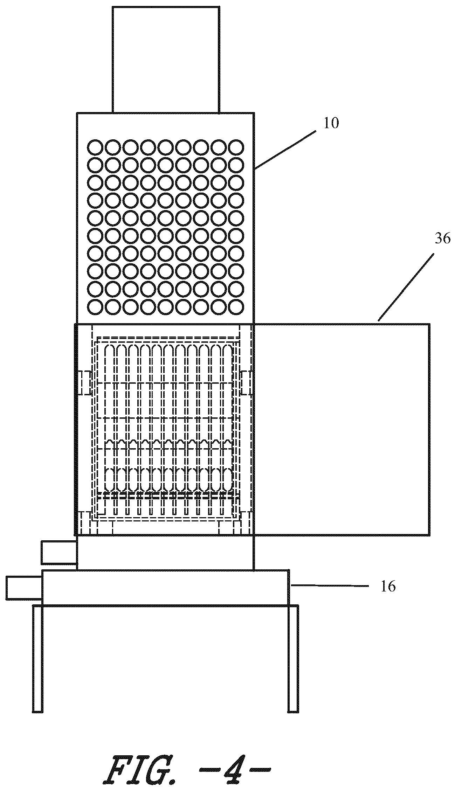

The present invention, in a preferred embodiment, is a bale boiler 10 that incinerates bales 12 of material, and particularly bales 12 made from waste, garbage and other refuse, in order to provide heat for a steam turbine generator 14 (or for any type of electricity generator that is powered by heat). As shown in Figures 1-4, the bale boiler 10 includes a conveyor 16 for transporting bales 12 of waste material through a three-stage boiler 10, and then removing the ash and non-combustible waste from the boiler 10 and depositing it in a receptacle or container 20 for transport and disposal.

The boiler 10 is preferably divided into three chambers 22 for three separate stages of the incineration process: 1) a first chamber 24 used for the warming stage, 2) a second chamber 28 used for the main incineration stage, and 3) a third chamber 32 used for the supplemental incineration stage. In the warming stage, the heat from the main incineration stage is used to warm the bale 12 and remove any moisture that may be present. When the bale 12 is moved into the main incineration chamber 28, it is burned to create heat that is then used to power a steam turbine electrical generator 14 or the like. At the end of the incineration stage, some of the bale 12 may remain burning and smoldering, and the remnants of the bale 12 are then moved by the conveyor 16 into the third chamber 32, which is the supplemental incineration stage. In this third stage, the remnants of the bale 12 burn down to ash, and the remaining ash and non-combustible waste are then transported out of the boiler 10 by the conveyor 16 and dumped into a receptacle or container 20 for transport and disposal.

The bales 12 are preferably placed on the conveyor 16 in evenly spaced increments so that each bale 12 progresses through the successive stages in an orderly, cyclical fashion. In other words, if a first bale 12 is in the first chamber 24 of the boiler 10 and the time comes to move it into the second chamber, the conveyor 16 transports the first bale 12 into the second chamber 28, and a second bale 12 (placed behind the first bale on the conveyor) moves into the first chamber 24 of the boiler 10. The process is cyclical, so that the conveyor 16 moves the successive bales 12 into each stage and then stops while the incineration operation is underway. Then, when the bale 12 that is in the incineration chamber 28 has been mostly (but not necessarily completely) burned, then the conveyor 16 transports that bale 12 to the supplemental stage in the third chamber 32, so that all bales 12 simultaneously proceed to the next successive chamber or stage.

It is contemplated that each chamber of the boiler 10 may be separated by doors or separators 36 that separate the different stages from one another during the incineration operation for each bale 12. When it is time for the conveyor 16 to move the bales 12 to the next chamber and stage of the boiler 10, the doors or separators 36 are opened to allow the bales 12 to pass therethrough, and then close again before the incineration operation begins on the next successive bale 12 in the queue. It is contemplated that this process may be operated manually, or automatically, based on temperature sensors 38 within the main incineration chamber 28 (or other types of sensors, such as laser sensors that detect the size of the bale, for example). Alternatively, the automated process may simply be a timed process, so that the bales 12 remain in each stage for a predetermined period of time.

The boiler 10 is operatively connected to a heat powered electric generator 14, such as a steam turbine or the like, and the heat from the boiler 10 comes primarily from the main incineration chamber 28, while a portion of the heat is provided by the third, supplemental incineration stage in chamber 32.

The present arrangement allows for a series of bales 12 to be placed on the conveyor 16 for incineration, and the conveyor 16 and boiler 10 may run continuously, without interruption, so long as there are bales 12 being loaded onto the conveyor 16. It is also contemplated that the boiler/ generator apparatus 10 may be formed into mobile unit and be transportable by truck to any desired location for generating electricity.

In general terms, heat powered generators typically require a great deal of time and effort to prepare the materials before the incineration process begins. Advantageously, the present invention reduces or eliminates the step of preparing the materials for burning, as the bales themselves may be burned without any preparation beforehand. The bale boiler apparatus and process allows the trash to be collected and baled, then stored (if necessary), and then to be burned in due course.

Although the present invention has been described in considerable detail with reference to certain preferred versions thereof, other versions are possible. Therefore, the scope of the appended claims should not be limited to the description of the preferred versions contained herein. All features disclosed in this specification may be replaced by alternative features serving the same, equivalent or similar purpose, unless expressly stated otherwise. Thus, unless expressly stated otherwise, each feature disclosed is one example only of a generic series of equivalent or similar features.

## Claims

1. A boiler apparatus comprising:
a multi-stage boiler (10) including a housing that is divided into three separate chambers (22) for various stages of an incineration process;
a first chamber (24) is used for a warming stage, a second chamber (28) used for a main incineration stage, and third chamber (32) used for a supplemental incineration stage;
a conveyor (16) extending longitudinally through each chamber of said multi-stage boiler (10), **characterized in that**
the boiler apparatus is a bale boiler apparatus; a heat powered electric generator (14) operatively connected to said multi-stage boiler;
wherein said conveyor (16) transports bales (12) of material through each chamber of said multi-stage boiler (10) such that said bales (12) are burned to generate heat; and
wherein said heat is used to power said heat powered electric generator (14) in order to produce electricity.

2. The boiler apparatus set forth in claim 1, wherein said multi-stage boiler (10) further includes a separating mechanism (36) for separating each said chamber from the next.

3. The boiler apparatus set forth in claim 1, further including temperature sensors in said second chamber (28).

4. The boiler apparatus set forth in claim 1, further including laser sensors to detect the size of a bale (12).

5. The boiler apparatus set forth in claim 1, further including a container operatively connected to said multi-stage boiler (10) to collect ash or leftover waste generated by said incineration process.

## Patentansprüche

1. Kesselvorrichtung, umfassend:
einen mehrstufigen Kessel (10), der ein Gehäuse umfasst, das in drei separate Kammern (22) für verschiedene Stufen eines Verbrennungsprozesses unterteilt ist;
eine erste Kammer (24), die für eine Erwärmungsstufe verwendet wird, eine zweite Kammer (28), die für eine Hauptverbrennungsstufe verwendet wird, und eine dritte Kammer (32), die für eine zusätzliche Verbrennungsstufe verwendet wird;
ein Förderband (16), das sich in Längsrichtung durch jede Kammer des mehrstufigen Kessels (10) erstreckt,
**dadurch gekennzeichnet, dass**
die Kesselvorrichtung eine Ballenkesselvorrichtung ist;
ein durch Wärme angetriebener elektrischer Generator (14) operativ mit dem mehrstufigen Kessel verbunden ist;
wobei das Förderband (16) Ballen (12) aus Material durch jede Kammer des mehrstufigen Kessels (10) transportiert, sodass die Ballen (12) verbrannt werden, um Wärme zu erzeugen; und
wobei die Wärme dazu verwendet wird, den durch Wärme angetriebenen elektrischen Generator (14) zu betreiben, um Elektrizität zu erzeugen.

2. Die Kesselvorrichtung nach Anspruch 1, wobei der mehrstufige Kessel (10) ferner einen Trennmechanismus (36) zum Trennen jeder Kammer von der nächsten umfasst.

3. Die Kesselvorrichtung nach Anspruch 1, ferner umfassend Temperatursensoren in der zweiten Kammer (28).

4. Die Kesselvorrichtung nach Anspruch 1, ferner umfassend Lasersensoren zur Erfassung der Größe eines Ballens (12).

5. Die Kesselvorrichtung nach Anspruch 1, ferner umfassend einen Behälter, der operativ mit dem mehrstufigen Kessel (10) verbunden ist, um Asche oder verbleibenden Abfall zu sammeln, der durch den Verbrennungsprozess erzeugt wird.

## Revendications

1. Appareil de chaudière, comprenant:
une chaudière multi-étages (10) comprenant un boîtier divisé en trois chambres séparées (22) pour différentes étapes d'un processus d'incinération;
une première chambre (24) utilisée pour une étape de préchauffage, une deuxième chambre (28) utilisée pour une étape d'incinération principale et une troisième chambre (32) utilisée pour une étape d'incinération complémentaire;
un convoyeur (16) s'étendant longitudinalement à travers chaque chambre de ladite chaudière multi-étages (10),
**caractérisé en ce que**
l'appareil de chaudière est un appareil de chaudière à balles;
un générateur électrique alimenté par la chaleur (14) est relié fonctionnellement à ladite chaudière multi-étages;
dans lequel ledit convoyeur (16) transporte des balles (12) de matériau à travers chaque chambre de ladite chaudière multi-étages (10) de sorte que lesdites balles (12) soient brûlées pour générer de la chaleur; et
dans lequel ladite chaleur est utilisée pour alimenter ledit générateur électrique alimenté par la chaleur (14) afin de produire de l'électricité.

2. L'appareil de chaudière selon la revendication 1, dans lequel ladite chaudière multi-étages (10) comprend en outre un mécanisme de séparation (36) permettant de séparer chaque chambre de la suivante.

3. L'appareil de chaudière selon la revendication 1, comprenant en outre des capteurs de température dans ladite deuxième chambre (28).

4. L'appareil de chaudière selon la revendication 1, comprenant en outre des capteurs laser pour détecter la taille d'une balle (12).

5. L'appareil de chaudière selon la revendication 1, comprenant en outre un récipient relié fonctionnellement à ladite chaudière multi-étages (10) pour collecter les cendres ou les déchets résiduels générés par ledit processus d'incinération.
